# EUROPEAN PATENT SPECIFICATION

(11) **EP 4 204 298 B1**
(45) Date of publication and mention of the grant of the patent: **16.04.2025**
(21) Application number: 21883447.1
(22) Date of filing: 11.10.2021
(51) Int. Cl.: B63G 8/14, B63G 8/18

(54) **AN UNDERWATER DEVICE**
UNTERWASSERVORRICHTUNG
DISPOSITIF SOUS-MARIN

(30) Priority: 20.10.2020 TR 202016711
(43) Date of publication of application: 05.07.2023
(73) Proprietor: Dokuz Eylül Üniversitesi Rektörlügü, 35220 Konak, Izmir (TR)
(72) Inventor: GÜRSEL, Kadri Turgut, 35240 Konak/Izmir (TR)
(86) International application number: PCT/TR2021/051038
(87) International publication number: WO 2022/086471

(56) References cited:
- EP-A1- 2 452 869
- WO-A2-2007/045887
- KR-B1- 101 507 422
- US-A1- 2003 164 135
- US-A1- 2012 290 164
- US-A1- 2019 144 090

## Description

### Field of Invention

The present invention relates an autonomous surface and underwater vehicle, which is independent under water and on the water surface, that is, completely autonomous, and which uses its own power source, within the scope of naval architecture and mechatronics engineering.

### Prior Art

The underwater and surface vehicles used today can be in different types and features. ROV, Remotely Operated underwater Vehicle is an underwater vehicle that performs a number of functions for various underwater purposes, which may be dangerous or even impossible for the divers, by providing data and energy flow through a series of cable connections, and therefore by being controlled by an operator. Therefore, a ROV system consists of cameras mounted on the vehicle, robot arms, various sensors, sonar and measurement systems, as well as a propulsion and maneuvering system, and a control panel where an operator controls these systems, a cable connecting the vehicle to the surface and crane mechanisms that enables the vehicle to be lowered into the water and taken back. When today's technologies are considered, it should be called "cable-controlled underwater vehicle" rather than remote control. The common feature that distinguishes the Autonomous underwater device (AUV: Autonomous Underwater Vehicle or UUV: Unmanned Underwater Vehicle) and the Autonomous surface vehicle (ASV: Autonomous Underwater Vehicle or UMV: Unmanned Marine Vehicle) from the ROVs is that they are independent, that is, completely autonomous, under water and on the water surface, and therefore they have their own power source and have to be remotely controlled. It is possible for AUVs to be designed and programmed in such a way that they can perform the planned task on the pre-programmed routes, as well as continue their activities in case of unforeseen situations during the task or no communication according to their autonomy levels. While the hull of the constructions is completely hydrodynamically shaped, usually spheroidal in AUV type vehicles, it can be in any form suitable for the task, mostly in a protective cage-frame in ROVs. In ASVs, the hull form has hydrodynamic and structural characteristics of a single or multi-hull surface vehicle. These said three different marine vehicles (AUV, ASV, ROV) produced by different or same manufacturers are offered to research and engineering organizations for similar or different tasks and research to be carried out on the surface and underwater. However, since these high-cost vehicles cannot be used interchangeably, relevant institutions either obtain only one of these vehicles by limiting their studies or they have to purchase these three high-cost vehicles. Since the energy consumption of autonomous vehicles is high, operation periods are limited.

Generally, all underwater vehicles are designed to have positive buoyancy, that is, the buoyancy force is greater than the vehicle weight force, in order to be able to come to the water surface spontaneously when their energy is consumed or when their systems do not operate because of any electromechanical failure. However, therefore, they need the thrust of the vertical axis engine and propellers to stay at a constant depth in the water. Since this situation causes the energy consumptions to increase, the periods of underwater operations are very limited.

Also, since the hardware, programs and usage procedures are in different structures, different qualified personnel are assigned in the user organization and the organization allocates a separate budget for the maintenance and repair of each vehicle and takes the risks of high costs. The vehicle consists of suitable modules in order to carry out the comprehensive tasks performed by the three different types of marine vehicles mentioned above with the only vehicle subject to the invention; there is a need for an underwater and surface vehicle that operates in harmony with all modular forms of the vehicle and propulsion equipment, navigation and measurement systems.

A mobile underwater coupling and charging station system and autonomous underwater vehicle are disclosed in the invention included in the United States patent document numbered US2020262529 (A1), which is in the state of the art. The underwater coupling and charging system (docking) of the invention included in the document in the state of the art has a flat cone and a grooved ramp at the end of the flat cone. The grooved ramp has a plurality of inclined planes, each located on the respective side of the housing. A coupling adaptor attached to an underwater vehicle includes a guide plane and a mask. The flat cone directs the guide plane to the charging unit located at the top of the ramp during berthing, therefore, the underwater vehicle can be charged. Another aspect of the invention included in the document in the state of the art is a sea-glider (used for underwater vehicle) that is maneuverable and comprises a mounted buoyancy module, followed by a head-to-tail slope control module, followed by an operating system module, followed by a rolling control module, which is mounted concentrically with respect to each other. This vehicle can be connected to any berthing system. When it is used with the berthing system, the underwater vehicle (sea-glider) can be docked to the flat cone or berthing adaptor of the coupling system of the present invention. In the invention included in the document in the state of the art, an autonomous underwater vehicle that performs the coupling process only to the underwater charging station is mentioned. However, the technical feature of transforming an autonomous underwater vehicle into an autonomous surface or an cable-controlled underwater vehicle cannot be achieved by placing different modules, as in the invention subject to the application.

A multi autonomous underwater vehicle system is disclosed in the invention included in the United States patent document numbered US2020180740 (A1), which is in the state of the art. In said invention, which is included in the document in the state of the art, the multiple autonomous underwater vehicles (AUV) can be directed and controlled by a single host surface vehicle (HSV) by configuring the AUVs with the intermediate nodes (unmanned surface vehicles (USVs) in such a way that it enables one research vessel (HSV) to manage multiple AUVs. The intermediate nodes (USV) act as a relay for the communication between the HSV and the AUVs and enable the HSV to scale to a greater number of vehicles, and therefore to operate all of the AUV fleet simultaneously. The AUVs can provide underwater mapping data. The multi-underwater vehicle system in the invention, which is included in the document in the state of the art includes a system that enable the autonomous underwater and autonomous surface vehicles to operate together at the same time. However, the invention, which is included in the document in the state of the art does not transform into different types of marine vehicles (such as ASV and ROV) in case that different modules are added to the underwater vehicle (AUV) in the invention subject to the application. It is formed to provide fleet (swarm) control by combining only two or more different types of underwater and surface vehicles within the scope of a system.

The detailed design and production of the underwater vehicle module, which is included in the invention subject to the application is primarily performed as AUV in order to carry out the desired research in very shallow waters such as gulfs, lakes and ponds or in deep seas and seabed. One of the most important differences and originality of the underwater vehicle module in the invention subject to the application is that it can dive or exit in the vertical direction with a vertically positioned a pair of thrusters. Also, it has a high maneuvering and impulsion capability by means of its a pair of horizontal axis propellers. In addition, the inventive underwater vehicle does not need vertical axis thrusters when under sail by means of its special reverse wing form. In the invention subject to the application, when the second module that consists of four specially formed struts and a platform is added to the AUV (and when the ballasts are removed), this vehicle can be transformed into an autonomous surface marine vehicle suitable for remotely controlled research on the surface as an ASV. Also this vehicle can be transformed into an ROV by adding , a third module including a pair of engines with a high head- and sternway capability, and a pair of propellers with a large diameter, data and energy transmission cables as well ballasts. In this case, an invention emerges that can be transformed into an autonomous vehicle that can be remotely controlled both underwater and surface and a cable-controlled underwater and surface vehicle with a single underwater vehicle.

Another example of a multi purpose surface and fully submersible vehicle is disclosed in Patent publication US2019144090A1.

In the state of the art, there is no description related to the technical features of the invention subject to the application and the technical effects provided with the invention subject to the application. In the present embodiments, an underwater vehicle similar to said underwater vehicle is not encountered.

### Objects of the Invention

The object of the present invention is to perform an autonomous underwater vehicle by first placing the ballast on the buoyancy element so as to form the first module that acts as an (unmanned remotely controlled) autonomous underwater vehicle (AUV).

Another object of the present invention is to perform a surface marine vehicle by first mounting an aerodynamic platform to the buoyancy element with four struts in order to form a second module that acts as an autonomous surface marine vessel (ASV) providing water surface research in shallow waters and open seas in addition to the underwater vehicle.

Another object of the invention is to perform an underwater vehicle by mounting the ballast to the buoyancy element and attaching a pair of motor-propellers and data and energy transmission cables besides the strut kit and the aerodynamic platform so as to form a third module that acts as a cable-controlled underwater vehicle (ROV) that performs a range of functions that are for various underwater purposes , which may be dangerous or even impossible for the divers, by providing data and energy flow with a range of cable connections of the modular vehicle, and thus by being controlled by an operator.

Another object of the present invention is to realize together (unmanned remotely controlled) an autonomous underwater vehicle (AUV), an autonomous surface marine vehicle (ASV) that provides surface research in shallow waters and deep seas and an underwater vehicle that can be used as a cable-controlled underwater vehicle (ROV) that performs a range of tasks (independent from its battery energy), which is for various underwater purposes and can be dangerous and even impossible for the divers, by providing data and energy flow with a range of cable connections, and thus by being controlled by an operator.

### Brief Description of the Invention

An underwater vehicle that is performed to achieve the object of this invention and defined in the first claim and the other claims dependent on this claim consists of a buoyancy element, a ballast, a strut kit, an aerodynamic platform, a pair of engine-propellers, a data and energy transmission cable and a control unit. In order to form the first module of the underwater vehicle, which acts as an (unmanned remotely controlled) autonomous underwater vehicle (AUV), the ballast is first placed in the buoyancy element. In the case of placing ballast under the buoyancy element, the downward thrust generated on the buoyancy element ensures neutral buoyancy, that is, equalization of the buoyancy force and the vehicle weight force, since the ballast form ensures the buoyancy element to be in reverse wing form while cruising in underwater. The ballast gives a neutral buoyancy, that is, a weight close to the lifting force by increasing the weight of the buoyancy element and increases the stability of the buoyancy element by reducing the height of the center of gravity of its hull with the addition of the ballast to the first module of the underwater vehicle that acts as an autonomous under vehicle (AUV).

In order to form the second module of the underwater vehicle that acts as an autonomous surface marine vessel (ASV) that provides surface research in shallow waters and deep seas, first, an aerodynamic platform and a strut kit are attached to the buoyancy element. The second module enables the buoyancy element to be transformed into a symmetrical form and get lighter since the ballast element is removed while the aerodynamic platform is mounted on the strut kit on the buoyancy element. Since the removal of the ballast element enables the buoyancy element to transform into a symmetrical form, the formation of vertical thrust force is prevented. As the waterlines cross-sectional areas of the strut kit rise to the aerodynamic platform from the buoyancy element, it does not remain unchanged and has a special form that grows on both axes. For this reason, the strut kit limits its high sensitivities to the weight changes of the SWATH (Small Waterplane Area Twin Hull), which has small water lines, and also prevents the platform, which has deck function, from approaching the water level during weight increase. The specially formed strut kit provides a very limited increase of the wave resistance component of the ASV at high speeds.

A data and energy transmission cable with a pair of engine-propellers besides the strut kit, aerodynamic platform and ballast are mounted to the buoyancy element so as to form a third module that acts as a cable-controlled underwater vehicle (ROV) performing a range of functions, which are for various underwater purposes and that may be dangerous and even impossible for the divers, by providing data and energy flow with a range of cable connections, and therefore by being controlled by an operator. The engine-propeller system provides a power and thrust required for carrying out the studies for a long time independent from the battery energy both underwater and surface and under moderate sea conditions, with the mounting of data and energy transmission cable, a pair of engine-propellers besides the ballast element, the specially formed strut kit, the aerodynamic platform to the buoyancy element. The data and energy transmission cable provides the connection of the buoyancy element and the motor-propeller pair, and enables it to be controlled by the user. Therefore, the inventive vehicle, (unmanned remotely controlled) the autonomous underwater vehicle (AUV), can be converted into an autonomous surface marine vehicle (ASV) that provides surface research in shallow waters and deep seas and into an underwater vehicle that can be used as a cable-controlled underwater vehicle (ROV) that performs a range of tasks, which is for various underwater purposes and that may be dangerous and even impossible for the divers, by providing data and energy flow with a range of cable connections, and therefore by being controlled by an operator.

### Detailed Description of the Invention

The multi-purpose modular underwater vehicle that is performed to achieve the object of the present invention is shown in the attached drawings; these drawings are as follows;

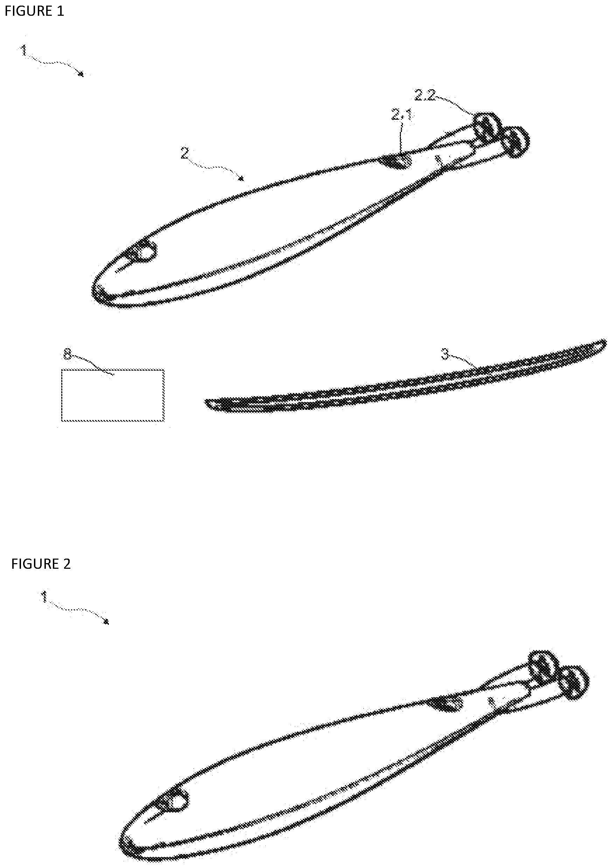

**Figure 1** is a perspective view of the elements that form the first module (exploded) of the underwater vehicle.
**Figure 2** is a perspective view of the first module of the underwater vehicle.

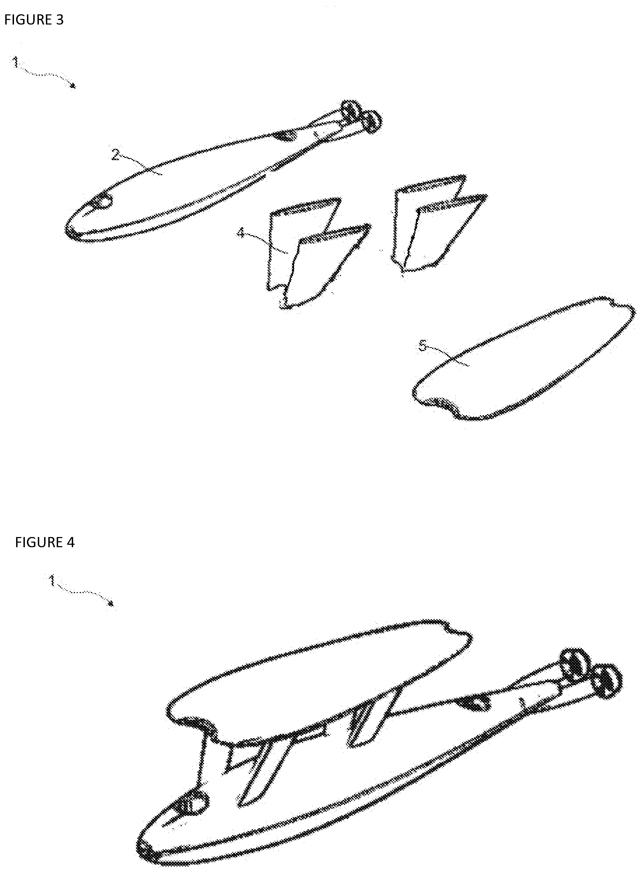

**Figure 3** is an exploded view of the second module of the underwater vehicle.
**Figure 4** is a perspective view of the second module of the underwater vehicle.

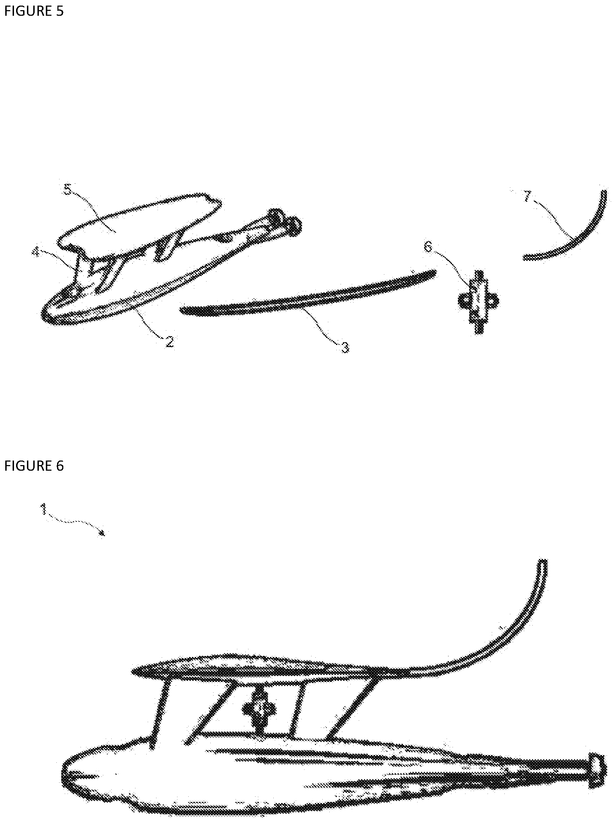

**Figure 5** is an exploded view of the third module of the underwater vehicle.
**Figure 6** is a side view of the third module of the underwater vehicle.

The parts in the drawings are numbered individually and the equivalents of these numbers are given below.
**1.** Underwater vehicle
**2.** Buoyancy element
   **2.1.** Vertical axes thruster
   **2.2.** Propulsion propeller
**3.** Ballast
**4.** Specially formed strut kit
**5.** Aerodynamic platform
**6.** Engine-propeller
**7.** Data and energy transmission cable
**8.** Control unit

An autonomous surface and underwater vehicle (1), which is independent under water and on the water surface, that is, completely autonomous, using its own power source, can convert into a surface vehicle or a cable-controlled vehicle in shallow waters and deep seas within the scope of naval architecture and mechatronics engineering This vehicle mainly comprises the following:
- at least one buoyancy element (2) that comprises at least one vertical axis thruster (2.1) and at least one propeller (2.2), that forms the entire submerged hull and has a reverse wing form with the ballast element (3),
- at least one vertical axis thruster (2.1) that is located one in the front and one in the rear part of the buoyancy element (2), that enables the buoyancy element (2) to dive to the preferred or targeted depth from the position where it was launched or from the position in which it is located,
- at least one propulsion propeller (2.2) that is located in the back of the buoyancy element (2) with a horizontal axis, that provides the necessary horizontal cruising of the buoyancy element (2) during the deep diving for the seabed by rotating around its central axis,
- at least one ballast (3) in hydrodynamic form which
   - enables the downward thrust generated on the buoyancy element (2) to create the neutral buoyancy, that is, the buoyancy force and the weight force to be equalized while cruising in underwater, since the buoyancy element (2) has reverse wing form by means of the ballast element (3),
   - gains a weight close to the buoyancy force in a way that it provides neutral buoyancy by increasing the weight of the buoyancy element (2),
   - increases the stability of the buoyancy element (2) by reducing the height of the center of gravity of the hull,
   - enables the buoyancy element (2) to be converted into an autonomous underwater vehicle (AUV) by giving the buoyancy element (2) a reverse wing form,
- at least one strut kit (4) that is located on the buoyancy element (2),
   - limits the high sensitivity of SWATH boats, which have small waterlines cross-sectional areas, to the weight changes since the waterlines cross-sectional areas do not remain constant as they rise from the buoyancy element to the aerodynamic platform, and they have a special form that grows in both axes.
   - enables the wave resistance component of the autonomous surface vehicle to increase limitedly at high speeds and,
   - is also adopted in a special form preventing the platform, which has a deck function, to approach to the water level in the weight increase,
- at least one aerodynamic platform (5) that is used with the strut kit (4), and located on the specially formed strut kit (4),
   - enables the buoyancy element (2) to be converted into an autonomous surface marine vehicle (ASV) when located in the buoyancy element (2) together with the specially formed strut kit (4),
- at least one engine-propeller (6) that is mounted to the buoyancy element (2) where the aerodynamic platform (5) is placed with the specially formed strut kit (4),
   - has a high head- and sternway capability and has a pair of propellers,
   - provides a power and thrust required for carrying out the studies for a long time independent from the battery energy both underwater and surface and under moderate sea conditions,
- at least one data and energy transmission cable (7) that is positioned on the buoyancy element (2) where the specially formed strut kit (4), aerodynamic platform (5) and the engine-propeller (6) are located, that enables the connection of the buoyancy element (2) and enables it to be controlled by the user, that enables the buoyancy element (2) to convert into a cable-controlled underwater vehicle (ROV) when used with the ballast element (3), the specially formed strut kit (4), the aerodynamic platform (5) and the engine-propeller (6),
- at least one control unit (8) that is adapted to control the operation of the buoyancy element (2) and after its converting into an autonomous underwater vehicle (AUV), a surface vehicle (ASV), a cable-controlled underwater vehicle (ROV), that controls each vehicle.

The inventive underwater vehicle (1) is used in underwater and on water surface within the scope of naval architecture and mechatronics engineering. The underwater vehicle (1) is independent, that is, completely autonomous both in underwater and on water surface. The underwater vehicle (1) uses its own power source and can be converted into a surface vehicle or a cable-controlled vehicle in shallow waters and deep seas. The underwater vehicle (1), in the first module which it can be converted into, it can first provide the function of an autonomous (unmanned remotely controlled) underwater vehicle (AUV) in order to carry out the studies in different areas of the marine environment (underwater - surface), that is, in very shallow waters and deep seas and seabed and in the Earth's crust layers. The underwater vehicle (1) can provide its function by being converted into an autonomous surface marine vehicle (ASV) that provides research on the water surface in shallow waters and deep seas within the second module to which it is able toconvert. The underwater vehicle (1), in the third module to which it is able to convert, can provide the function of a cable-controlled underwater vehicle (ROV) that provides a range of functions, which are for various underwater purposes and that may be dangerous and even impossible for the divers, by providing data and energy flow with a range of cable connections, and therefore by being controlled by an operator. The underwater vehicle (1) comprises a buoyancy element (2), a ballast (3), a specially formed strut kit (4), an aerodynamic platform (5), an engine-propeller (6), a data and energy transmission cable (7) and a control unit (8).

The buoyancy element (2), which is included in an embodiment of the invention, forms the entire hull. The buoyancy element (2) forms the part that enters the water. The buoyancy element (2) comprises two vertical axis thrusters (2.1) and two propulsion propellers (2.2). The buoyancy element (2) has a reverse wing form with the ballast element (3). There is one vertical axis thruster (2.1) in the front and rear part of the buoyancy element (2). The vertical axis thruster (2.1) enables the buoyancy element (2) to dive from the position where it is launched or from the position where it is in, to the preferred, targeted depth. There are two propulsion propellers (2.2) at the rear end of the buoyancy element (2). The propulsion propellers (2.2) are in horizontal axis. The propulsion propellers (2.2) provide the necessary horizontal movement of the buoyancy element (2) during deep diving for seabed research by rotating about its central axis. The propulsion propellers (2.2) enable the buoyancy element (2) to dive deeper into the sea in a balanced manner on the horizontal and vertical axis with the vertical axis thrusters (2.1), and to surface by moving (cruising) in the sea in the horizontal and vertical axis in a balanced manner.

The ballast (3), which is included in an embodiment of the invention, is in hydrodynamic form. When the ballast (3) is mounted on the buoyancy element (2) alone, it converts the buoyancy element (2) into an autonomous underwater vehicle (AUV). When the ballast (3) is used with the specially formed strut kit (4), the aerodynamic platform (5), the engine-propeller (6) and the data-energy transmission cable (7), it converts the buoyancy element (2) into a cable-controlled underwater vehicle (ROV). It enables the downward thrust generated on the buoyancy element (2) to create the neutral buoyancy, that is, the buoyancy force and the weight force to be equalized while cruising in underwater, since the buoyancy element (2) has reverse wing form with the ballast element (3). The ballast (3) increases the weight of the buoyancy element (2) (neutral buoyancy) and gives it a weight close to the buoyancy force. The ballast (3) increases its stability by reducing the height of the center of gravity of the buoyancy element (2). The ballast (3) enables the buoyancy element (2) to be converted into an autonomous underwater vehicle (AUV) by giving the buoyancy element (2) a reverse wing form.

The specially formed strut kit (4), which is included in an embodiment of the invention, is positioned on the buoyancy element (2). The specially formed strut kit (4) limits the high sensitivity of SWATH boats, which have small waterline areas, to weight changes. The specially formed strut kit (4) also prevents the platform, which has the deck function, from approaching the water level during weight increase. The strut kit (4) provides a very limited increase in the wave resistance component of the autonomous surface vehicle at high speeds.

In an embodiment of the invention, the aerodynamic platform (5) is used with the specially formed strut kit (4). The aerodynamic platform (5) is placed on the strut kit (4). When the aerodynamic platform (5) is placed on the buoyancy element (2) with the strut kit (4), it enables the buoyancy element (2) to convert into an autonomous surface marine vehicle (ASV).

The engine-propeller (6), which is included in an embodiment of the invention, is placed on the buoyancy element (2) where the ballast element (3), the strut kit (4) and the aerodynamic platform (5) are mounted. The engine-propeller (6) has a high head- and sternway capability. The motor-propeller (6) has a pair of propellers. The engine-propeller (6) provides a power and thrust required for carrying out the studies for a long time independent from the battery energy both underwater and surface and under moderate sea conditions.

In an embodiment of the invention, the data and energy transmission cable (7) is positioned on the buoyancy element (2) where the ballast element (3), the strut kit (4), the aerodynamic platform (5) and the engine-propeller (6) are placed. The data and energy transmission cable (7) provides the connection of the buoyancy element (2) and enables it to be controlled by the user. When the data and power transmission cable (7) is used with the ballast element (3), the strut kit (4), the aerodynamic platform (5) and the engine-propeller (6), it enables the buoyancy element (2) to be converted into a cable-controlled underwater vehicle (ROV) and to operate independent from the battery energy.

The control unit (8), which is included in an embodiment of the invention, is adapted to enable the buoyancy element (2) to operate. The control unit (8) is adapted to control the transformation of the vehicle into an autonomous underwater vehicle (AUV), an autonomous surface marine vehicle (ASV), a cable-controlled underwater vehicle (ROV) and to operate autonomously or in a cable-controlled way after transformation. The control unit (8) controls the operation of the buoyancy element (2), the ballast (3), the strut kit (4), the aerodynamic platform (5), the motor-propeller (6) and the data and energy transmission cable (7).

The underwater vehicle (1), which is included in this embodiment of the invention, is used as follows. First, the ballast (3) is mounted on the buoyancy element (2) so as to form the first module of the underwater vehicle (1) (unmanned remotely controlled), which acts as an autonomous underwater vehicle (AUV). The downward thrust formed on the buoyancy element (2) to create the neutral buoyancy while cruising in underwater enables it to be equalized the buoyancy force to the weight force, since the buoyancy element (2) gains a reverse wing form with the ballast (3) in case that the ballast (3) is placed under the buoyancy element (2). The ballast gives a weight close to the lifting force by increasing the weight of the buoyancy element (2) (neutral buoyancy) and increases the stability of the buoyancy element (2) by reducing the height of the center of gravity of its hull with attaching the ballast (3) to the first module of the underwater vehicle (1) (unmanned remotely controlled) that acts as an autonomous under vehicle (AUV).

In order to form the second module of the underwater vehicle (1) that acts as an autonomous surface marine vessel (ASV) that provides surface research in shallow waters and deep seas, first, the specially formed strut kit (4) and the aerodynamic platform (5) are attached to the buoyancy element. The removal of the ballast element (3) enables the buoyancy element (2) to convert into a symmetrical form and to get lighter. Since the removal of the ballast element (3) enables the buoyancy element (2) to transform into a symmetrical form, the formation of vertical thrust force is prevented. The specially formed strut kit (4) limits the high sensitivity of SWATH boats, which have small waterlines areas, to weight changes and also prevents the platform, which has the deck function, from approaching the water level during weight increase. After attaching the specially formed strut kit (4) on the buoyancy element (2), and mounting the aerodynamic platform (5) on the strut kid (4), and after the removal of the ballast element (3), it is provided that the buoyancy element (2) is converted into a symmetrical form and gets lighter, and since it provides that the buoyancy element (2) transforms into the symmetrical form, the formation of the vertical thrust is prevented and the wave resistance component of the second module, which performs the function of an autonomous surface vehicle (ASV) at high speeds, increases very limitedly.

The engine-propeller (6) and the data and energy transmission cable (7) besides the ballast (3), the specially formed strut kit (4), the aerodynamic platform (5) are mounted to the buoyancy element (2) so as to form the third module that acts as a cable-controlled underwater vehicle (ROV), which performs a range of functions that are for various underwater purposes and that may be dangerous, even impossible for the divers, by providing data and energy flow with a range of cable connections of the underwater vehicle (1), and therefore by being controlled by an operator. The engine-propeller (6) provides a power and thrust required for carrying out the studies for a long time independent from the battery energy both underwater and surface and under moderate sea conditions (by getting energy from the data and energy transmission cable (7)), with attaching the engine-propeller (6) and the data and energy transmission cable (7) besides the ballast (3), the strut kit (4), the aerodynamic platform (5) to the buoyancy element (2). The data and energy transmission cable (7) provides the connection of the buoyancy element (2), which includes all of the control systems, and enables it to be controlled by the user. Therefore, the underwater vehicle (1) is used as the (unmanned remotely controlled) autonomous underwater vehicle (AUV) and an autonomous surface marine vehicle (ASV) that provides surface research in shallow and deep waters and as a cable-controlled underwater vehicle (ROV), which performs a range of functions that are for various underwater purposes and that may be dangerous, even impossible for the divers, by providing data and energy flow with a range of cable connections of the underwater vehicle (1),, and therefore by being controlled by an operator

## Claims

1. An autonomous surface and underwater vehicle (1), which is independent under water and on the water surface, that is, completely autonomous, using its own power source, capable of converting into a surface vehicle or a cable-controlled vehicle in shallow waters and deep seas, within the scope of naval architecture and mechatronics engineering, mainly comprising the following:
- at least one buoyancy element (2) that form the entire hull, which submerges into water,
- at least one ballast (3) that is in hydrodynamic form,
i. enables the downward thrust generated on the buoyancy element (2) to create the neutral buoyancy, that is, the buoyancy force and the weight force to be equalized while cruising in underwater since the buoyancy element (2) has reverse wing form by means the ballast element (3),
ii. gains a weight close to the buoyancy force in a way that it provides neutral buoyancy by increasing the weight of the buoyancy element (2),
iii. increases the stability of the buoyancy element (2) by reducing the height of the center of gravity of the hull,
iv. enables the buoyancy element (2) to be converted into an autonomous underwater vehicle (AUV) by giving the buoyancy element (2) a reverse wing form,
- at least one specially formed strut kit (4) that is located on the buoyancy element (2),
i. limits the high sensitivity of SWATH boats, which have small waterlines areas, to the weight changes since the waterlines cross-sectional areas do not remain constant as they rise from the buoyancy element to the aerodynamic platform, and they have a special form that grows in both axes.
ii. enables the wave resistance component of the autonomous surface vehicle to increase limitedly at high speeds and,
iii. is also adopted in a special form preventing the platform, which has a deck function, to approach to the water level in the weight increase,
- at least one aerodynamic platform (5) that is used with the specially formed strut kit (4), and located on the specially formed strut kit (4),
i. enables the buoyancy element (2) to convert into an autonomous surface marine vehicle (ASV) when located on the buoyancy element (2) together with the specially formed strut kit (4),
- at least one engine-propeller (6) that is mounted on the buoyancy element (2) where the aerodynamic platform (5) is placed with the specially formed strut kit (4),
i. has a high head- and sternway capability and a pair of propellers,
ii. provides a power and thrust required for carrying out the studies for a long time independent from the battery energy both underwater and surface and under moderate sea conditions,
- at least one data and energy transmission cable (7) that is positioned to the buoyancy element (2) where the specially formed strut kit (4), aerodynamic platform (5) and the engine-propeller (6) are mounted, that enables the connection of the buoyancy element (2) and enables it to be controlled by the user, that enables the buoyancy element (2) to convert into a cable-controlled underwater vehicle (ROV) when used with the ballast element (3), the specially formed strut kit (4), the aerodynamic platform (5) and the engine-propeller (6),
**characterized by;**
- at least one control unit (8) that is adapted to control the operation of the buoyancy element (2) and after its converting into an autonomous underwater vehicle (AUV), a surface vehicle (ASV) and a cable-controlled underwater vehicle (ROV), that controls each vehicle.

2. An underwater vehicle (1) according to claim 1, **characterized by;** the buoyancy element (2) that comprises at least one vertical axis thruster (2.1) and at least one propulsion propeller (2.2).

3. An underwater vehicle (1) according to claim 2, **characterized by;** at least one vertical axis thruster (2.1) that is located one in the front and one in the rear part of the buoyancy element (2), that enables the buoyancy element (2) to dive to the preferred or targeted depth from the position where it was launched or from the position in which it is located.

4. An underwater vehicle (1) according to claim 2, **characterized by;** at least one propulsion propeller (2.2) that is located in the back of the buoyancy element (2) with a horizontal axis, that provides the necessary horizontal cruising of the buoyancy element (2) during the deep diving for the seabed by rotating around its central axis,

5. An underwater vehicle (1) according to claim 1, **characterized by;** a buoyancy element (2) and a ballast element (3) that first performs the function of an autonomous (unmanned remotely controlled) underwater vehicle (AUV) so as to carry out the desired research in different areas of the marine environment (underwater-surface), that is, in the very shallow waters and deep seas and seabed and the Earth's crust layers, in the first module, which it can convert into.

6. An underwater vehicle (1) according to claim 1, **characterized by;** a buoyancy element (2), a strut kit (4) and an aerodynamic platform (5) that provides its function by converting into an autonomous surface marine vehicle (ASV), which provides surface research in shallow waters and deep seas, in the second module, which it can transform into.

7. An underwater vehicle (1) according to claim 1, **characterized by;** a buoyancy element (2), a ballast element (3), a strut kit (4), an aerodynamic platform (5), a pair of engine-propeller (6), a data and energy transmission cable (7) that provides the function of a cable-controlled underwater vehicle (ROV), which provides a range of functions that are for various underwater purposes and that may be dangerous, even impossible for the divers, by providing a data and energy flow with a range of cable connections, and therefore by being controlled by an operator, in the third module, which it can convert into.

8. An underwater vehicle (1) according to claim 2, **characterized by;** ) the vertical axis thrusters (2.1) that enables the buoyancy element (2) to dive deeper into the sea in a balanced manner on the vertical axis and to surface, to move in the sea on the horizontal axis in a balanced manner with the propulsion propeller (2.2).

9. An underwater vehicle (1) according to claim 1, **characterized by;** a ballast (3) that converts the buoyancy element (2) into an autonomous underwater vehicle (AUV) when it is mounted on the buoyancy element (2) by itself.

10. An underwater vehicle (1) according to claim 1, **characterized by;** a specially formed strut kit (4) and an aerodynamic platform (5) that convert the buoyancy element (2) into an autonomous surface vehicle (ASV) when it is mounted on the buoyancy element (2) by itself.

11. An underwater vehicle (1) according to claim 1, **characterized by;** the buoyancy element (2) that convert into a cable-controlled underwater vehicle (ROV) when it is used with the ballast element (3), the specially formed strut kit (4), the aerodynamic platform (5), the engine-propeller (6) and the data-energy transmission cable (7).

12. An underwater vehicle (1) according to claim 1, **characterized by;** using the same as (unmanned remotely controlled) autonomous underwater vehicle (AUV), an autonomous surface marine vehicle (ASV), which provides surface research in shallow waters and deep seas, and using a cable-controlled underwater vehicle (ROV) that performs a range of functions that are for various underwater purposeswhich may be dangerous and even impossible for the divers, by providing a data and energy flow with a range of cable connections, and thus being controlled by an operator.

## Patentansprüche

1. Ein autonomes Über- und Unterwasserfahrzeug (1), das unter Wasser und an der Wasseroberfläche unabhängig, d.h. völlig autonom ist, seine eigene Energiequelle nutzt und in der Lage ist, sich in flachen Gewässern und in der Tiefsee in ein Überwasserfahrzeug oder ein kabelgesteuertes Fahrzeug zu verwandeln, im Rahmen der Schiffsarchitektur und der Mechatronik, das hauptsächlich Folgendes umfasst:
- mindestens ein Auftriebselement (2), das den gesamten Schiffsrumpf bildet, der ins Wasser eintaucht,
- mindestens einen Ballast (3) in hydrodynamischer Form,
i. der es ermöglicht, dass der auf das Auftriebselement (2) erzeugte Abwärtsschub den neutralen Auftrieb erzeugt, d.h. dass die Auftriebskraft und die Gewichtskraft während der Fahrt unter Wasser ausgeglichen werden, da das Auftriebselement (2) durch das Ballastelement (3) eine umgekehrte Flügelform hat,
ii. der ein Gewicht nahe der Auftriebskraft erhält, so dass er für neutralen Auftrieb sorgt, indem er das Gewicht des Auftriebselements (2) erhöht,
iii. der die Stabilität des Auftriebselements (2) erhöht, indem er die Höhe des Schwerpunkts des Schiffsrumpfs verringert,
iv. der es ermöglicht, das Auftriebselement (2) in ein autonomes Unterwasserfahrzeug (AUV) umzuwandeln, indem das Auftriebselement (2) eine umgekehrte Flügelform erhält,
- mindestens einen speziell geformten Strebensatz (4), der auf dem Auftriebselement (2) angeordnet ist,
i. der die hohe Empfindlichkeit der SWATH-Boote, die kleine Wasserlinienflächen haben, gegenüber Gewichtsveränderungen begrenzt, da die Querschnittsflächen der Wasserlinien nicht konstant bleiben, wenn sie vom Auftriebselement zur aerodynamischen Plattform aufsteigen, und sie eine besondere Form haben, die in beiden Achsen wächst.
ii. der es ermöglicht, die Wellenwiderstandskomponente des autonomen Überwasserfahrzeugs bei hohen Geschwindigkeiten begrenzt zu erhöhen, und
iii. der ebenfalls in einer besonderen Form angenommen wird, die verhindert, dass sich die Plattform, die eine Deckfunktion hat, bei der Gewichtszunahme dem Wasserspiegel nähert,
- mindestens eine aerodynamische Plattform (5), die mit dem speziell geformten Strebensatz (4) verwendet wird und sich auf dem speziell geformten Strebensatz (4) befindet,
i. der es ermöglicht, das Auftriebselement (2) in ein autonomes Überwasserschiffsfahrzeug (ASV) umzuwandeln, wenn es sich zusammen mit dem speziell geformten Strebensatz (4) auf dem Auftriebselement (2) befindet,
- mindestens einen Motorpropeller (6), der auf dem Auftriebselement (2) montiert ist, wo die aerodynamische Plattform (5) mit dem speziell geformten Strebensatz (4) angebracht ist,
i. der eine hohe Kopf- und Hecklage und ein Paar Propeller aufweist,
ii. der eine Leistung und einen Schub liefert, die für die Durchführung der Studien über einen langen Zeitraum hinweg unabhängig von der Batterieenergie sowohl unter Wasser als auch an der Oberfläche und unter mäßigen Seebedingungen erforderlich sind,
- mindestens ein Daten- und Energieübertragungskabel (7), das an dem Auftriebselement (2) angebracht ist, an dem der speziell geformte Strebensatz (4), die aerodynamische Plattform (5) und der Motorpropeller (6) montiert sind, das die Verbindung des Auftriebselements (2) ermöglicht und dessen Steuerung durch den Benutzer erlaubt, die es ermöglicht, das Auftriebselement (2) in ein kabelgesteuertes Unterwasserfahrzeug (ROV) umzuwandeln, wenn es mit dem Ballastelement (3), dem speziell geformten Strebensatz (4), der aerodynamischen Plattform (5) und dem Motor-Propeller (6) verwendet wird,
**gekennzeichnet durch**
- mindestens eine Steuereinheit (8), die geeignet ist, den Betrieb des Auftriebselements (2) zu steuern und nach dessen Umwandlung in ein autonomes Unterwasserfahrzeug (AUV), ein Überwasserfahrzeug (ASV) und ein kabelgesteuertes Unterwasserfahrzeug (ROV) jedes Fahrzeug zu steuern.

2. Unterwasserfahrzeug (1) nach Anspruch 1,**gekennzeichnet durch** das Auftriebselement (2), das mindestens ein Vertikalachsen-Triebwerk (2.1) und mindestens einen Antriebspropeller (2.2) umfasst.

3. Unterwasserfahrzeug (1) nach Anspruch 2, **gekennzeichnet durch** mindestens ein Vertikalachsen-Triebwerk (2.1), von denen eines im vorderen und eines im hinteren Teil des Auftriebselements (2) angeordnet ist, das es dem Auftriebselement (2) ermöglicht, von der Position, an der es zu Wasser gelassen wurde, oder von der Position, an der es sich befindet, auf die bevorzugte oder angestrebte Tiefe zu tauchen.

4. Unterwasserfahrzeug (1) nach Anspruch 2, **gekennzeichnet durch** mindestens einen Antriebspropeller (2.2), der im hinteren Teil des Auftriebselementes (2) mit horizontaler Achse angeordnet ist, der durch Rotation um seine Mittelachse für die notwendige horizontale Fahrt des Auftriebselementes (2) während des Tieftauchens auf dem Meeresboden sorgt,

5. Unterwasserfahrzeug (1) nach Anspruch 1, **gekennzeichnet durch** ein Auftriebselement (2) und ein Ballastelement (3), das zunächst die Funktion eines autonomen (unbemannten, ferngesteuerten) Unterwasserfahrzeugs (AUV) erfüllt, um die gewünschten Forschungen in verschiedenen Bereichen der Meeresumwelt (Unterwasser-Oberfläche), d.h. in den sehr flachen Gewässern und den tiefen Meeren und dem Meeresboden und den Erdkrustenschichten, im ersten Modul, das es umbauen kann, durchzuführen.

6. Unterwasserfahrzeug (1) nach Anspruch 1, **gekennzeichnet durch** ein Auftriebselement (2), einen Strebensatz (4) und eine aerodynamische Plattform (5), die ihre Funktion erfüllt, indem sie sich im zweiten Modul, in das sie sich umwandeln kann, in ein autonomes Überwasserschiffsfahrzeug (ASV) verwandelt, das Oberflächenforschung in flachen Gewässern und in der Tiefsee betreibt.

7. Unterwasserfahrzeug (1) nach Anspruch 1, **gekennzeichnet durch** ein Auftriebselement (2), ein Ballastelement (3), einen Strebensatz (4), eine aerodynamische Plattform (5), ein Motor-Propeller-Paar (6), ein Daten- und Energieübertragungskabel (7), das die Funktion eines kabelgesteuerten Unterwasserfahrzeugs (ROV) bietet, das durch die Bereitstellung eines Daten- und Energieflusses mit einer Reihe von Kabelverbindungen und somit durch die Steuerung durch einen Bediener im dritten Modul, in das es umgewandelt werden kann, eine Reihe von Funktionen bietet, die für verschiedene Unterwasserzwecke weit entfernt sind und für die Taucher gefährlich oder sogar unmöglich sein können.

8. Unterwasserfahrzeug (1) nach Anspruch 2, **gekennzeichnet durch** die vertikalen Achsentriebwerke (2.1), die es dem Auftriebselement (2) ermöglichen, auf der vertikalen Achse ausbalanciert tiefer in das Meer einzutauchen und an die Oberfläche zu kommen, um sich auf der horizontalen Achse ausbalanciert mit dem Antriebspropeller (2.2) im Meer zu bewegen.

9. Unterwasserfahrzeug (1) nach Anspruch 1, **gekennzeichnet durch** einen Ballast (3), der das Auftriebselement (2) in ein autonomes Unterwasserfahrzeug (AUV) umwandelt, wenn es selbst auf dem Auftriebselement (2) montiert ist.

10. Unterwasserfahrzeug (1) nach Anspruch 1, **gekennzeichnet durch** einen speziell geformten Strebensatz (4) und eine aerodynamische Plattform (5), die das Auftriebselement (2) in ein autonomes Überwasserfahrzeug (ASV) umwandeln, wenn es allein auf dem Auftriebselement (2) montiert ist.

11. Unterwasserfahrzeug (1) nach Anspruch 1, **gekennzeichnet durch** das Auftriebselement (2), das sich in ein kabelgesteuertes Unterwasserfahrzeug (ROV) verwandelt, wenn es mit dem Ballastelement (3), dem speziell geformten Strebensatz (4), der aerodynamischen Plattform (5), dem Motor-Propeller (6) und dem Daten- und Energieübertragungskabel (7) verwendet wird.

12. Unterwasserfahrzeug (1) nach Anspruch 1, **gekennzeichnet durch** die Verwendung desselben als (unbemanntes, ferngesteuertes) autonomes Unterwasserfahrzeug (AUV), ein autonomes Oberflächenschiffsfahrzeug (ASV), das Oberflächenforschung in flachen Gewässern und in der Tiefsee ermöglicht, und durch die Verwendung eines kabelgesteuerten Unterwasserfahrzeugs (ROV), das eine Reihe von Funktionen für verschiedene Unterwasserzwecke ausführt, die für Taucher gefährlich oder sogar unmöglich sein können, indem es einen Daten- und Energiefluss mit einer Reihe von Kabelverbindungen bereitstellt und somit von einem Bediener gesteuert wird.

## Revendications

1. Un véhicule autonome de surface et sous-marin (1), indépendant sous l'eau et à la surface de l'eau, c'est-à-dire complètement autonome, utilisant sa propre source d'énergie, capable de se transformer en véhicule de surface ou en véhicule commandé par câble dans les eaux peu profondes et les mers profondes, dans le cadre de l'architecture navale et de l'ingénierie mécatronique, comprenant principalement les éléments suivants:
- au moins un élément flottant (2) qui forme l'ensemble de la coque qui s'immerge dans l'eau,
- au moins un ballast (3) sous forme hydrodynamique,
i. qui permet à la poussée vers le bas générée sur l'élément flottant (2) de créer une flottabilité neutre, c'est-à-dire que la force de flottabilité et la force de poids sont égalisées pendant la croisière sous-marine puisque l'élément flottant (2) a une forme d'aile inversée grâce à l'élément de ballast (3),
ii. qui gagne un poids proche de la force de flottabilité de manière à assurer une flottabilité neutre en augmentant le poids de l'élément flottant (2),
iii. qui augmente la stabilité de l'élément flottant (2) en réduisant la hauteur du centre de gravité de la coque,
iv. qui permet de transformer l'élément flottant (2) en véhicule sous-marin autonome (AUV) en donnant à l'élément flottant (2) une forme d'aile inversée,
- au moins un kit de jambes de force (4) spécialement formé, situé sur l'élément flottant (2),
i. qui limite la grande sensibilité des bateaux SWATH, qui ont de petites surfaces de lignes d'eau, aux variations de poids, car les surfaces de section des lignes d'eau ne restent pas constantes lorsqu'elles passent de l'élément flottant à la plate-forme aérodynamique, et elles ont une forme spéciale qui croît dans les deux axes.
ii. qui permet à la composante de résistance à l'onde du véhicule de surface autonome d'augmenter de façon limitée à des vitesses élevées et,
iii. qui est également adopté sous une forme spéciale empêchant la plate-forme, qui a une fonction de pont, de s'approcher du niveau de l'eau dans l'augmentation du poids,
- au moins une plate-forme aérodynamique (5) utilisée avec le kit de jambe de force (4) spécialement formé et située sur le kit de jambe de force (4) spécialement formé,
i. qui permet à l'élément flottant (2) de se transformer en un véhicule marin de surface autonome (ASV) lorsqu'il est placé sur l'élément flottant (2) avec le kit de jambes de force (4) spécialement formé,
- au moins une moteur-hélice (6) montée sur l'élément flottant (2) où la plate-forme aérodynamique (5) est placée avec le kit de jambes de force (4) spécialement formé,
i. qui a une grande capacité d'hélice et de poupe et d'une paire d'hélices,
ii. qui fournit la puissance et la poussée nécessaires pour mener à bien les études pendant une longue période, indépendamment de l'énergie de la batterie, aussi bien sous l'eau qu'en surface et dans des conditions de mer modérées,
- au moins un câble de transmission de données et d'énergie (7) placé sur l'élément flottant (2) où sont montés le kit de jambes de force (4) spécialement formé, la plate-forme aérodynamique (5) et le moteur-hélice (6), qui permet de connecter l'élément flottant (2) et de le faire contrôler par l'utilisateur, qui permet à l'élément flottant (2) de se transformer en un véhicule sous-marin commandé par câble (ROV) lorsqu'il est utilisé avec l'élément de ballast (3), le kit de jambes de force (4) spécialement formé, la plate-forme aérodynamique (5) et le moteur-hélice (6),
**caractérisé par;**
- au moins une unité de commande (8) adaptée pour contrôler le fonctionnement de l'élément flottant (2) et, après sa transformation en un véhicule sous-marin autonome (AUV), un véhicule de surface (ASV) et un véhicule sous-marin commandé par câble (ROV), pour contrôler chaque véhicule.

2. Véhicule sous-marin (1) selon la revendication 1, **caractérisé par** l'élément flottant (2) qui comprend au moins un propulseur à axe vertical (2.1) et au moins une hélice de propulsion (2.2).

3. Véhicule sous-marin (1) selon la revendication 2, **caractérisé par** au moins un propulseur à axe vertical (2.1) situé à l'avant et à l'arrière de l'élément flottant (2), qui permet à l'élément flottant (2) de plonger jusqu'à la profondeur préférée ou ciblée à partir de la position où il a été lancé ou de la position dans laquelle il se trouve.

4. Véhicule sous-marin (1) selon la revendication 2, **caractérisé par** au moins une hélice de propulsion (2.2) située à l'arrière de l'élément flottant (2) avec un axe horizontal, qui assure la croisière horizontale nécessaire de l'élément flottant (2) pendant la plongée profonde sur le fond marin en tournant autour de son axe central,

5. Véhicule sous-marin (1) selon la revendication 1, **caractérisé par** un élément flottant (2) et un élément de ballast (3) qui remplit d'abord la fonction d'un véhicule sous-marin autonome (sans équipage télécommandé) (AUV) afin d'effectuer les recherches souhaitées dans différents domaines de l'environnement marin (sous-marin-surface), c'est-à-dire dans les eaux très peu profondes et les mers profondes, les fonds marins et les couches de la croûte terrestre, dans le premier module, en lequel il peut se convertir.

6. Véhicule sous-marin (1) selon la revendication 1, **caractérisé par** un élément flottant (2), un kit de jambes de force (4) et une plate-forme aérodynamique (5) qui assure sa fonction en se transformant en un véhicule marin de surface autonome (ASV), qui effectue des recherches en surface dans les eaux peu profondes et les mers profondes, dans le deuxième module, en lequel il peut se transformer.

7. Véhicule sous-marin (1) selon la revendication 1, **caractérisé par** un élément flottant (2), un élément de ballast (3), un kit de jambes de force (4), une plate-forme aérodynamique (5), une paire de moteurs-hélices (6), un câble de transmission de données et d'énergie (7) qui assure la fonction d'un véhicule sous-marin commandé par câble (ROV), qui assure une série de fonctions très diverses sous l'eau et qui peuvent être dangereuses, voire impossibles pour les plongeurs, en fournissant un flux de données et d'énergie grâce à une série de connexions par câble, et donc en étant contrôlé par un opérateur, dans le troisième module, en lequel il peut se convertir.

8. Véhicule sous-marin (1) selon la revendication 2, **caractérisé par** les propulseurs à axe vertical (2.1) qui permettent à l'élément flottant (2) de plonger plus profondément dans la mer de manière équilibrée sur l'axe vertical et de remonter à la surface, de se déplacer dans la mer sur l'axe horizontal de manière équilibrée avec l'hélice de propulsion (2.2).

9. Véhicule sous-marin (1) selon la revendication 1, **caractérisé par** un ballast (3) qui transforme l'élément flottant (2) en un véhicule sous-marin autonome (AUV) lorsqu'il est monté seul sur l'élément flottant (2).

10. Véhicule sous-marin (1) selon la revendication 1, **caractérisé par** un kit de jambes de force (4) spécialement formé et une plate-forme aérodynamique (5) qui transforment l'élément flottant (2) en un véhicule de surface autonome (ASV) lorsqu'il est monté sur l'élément flottant (2) par lui-même.

11. Véhicule sous-marin (1) selon la revendication 1, **caractérisé par** l'élément flottant (2) qui se transforme en véhicule sous-marin commandé par câble (ROV) lorsqu'il est utilisé avec l'élément de ballast (3), le kit de jambes de force (4) spécialement formé, la plate-forme aérodynamique (5), le moteur-hélice (6) et le câble de transmission de données-d'énergie (7).

12. Véhicule sous-marin (1) selon la revendication 1, **caractérisé par** l'utilisation d'un véhicule sous-marin autonome (AUV) (sans équipage télécommandé), d'un véhicule marin de surface autonome (ASV), qui effectue des recherches en surface dans les eaux peu profondes et les mers profondes, et par l'utilisation d'un véhicule sous-marin commandé par câble (ROV) qui exécute une série de fonctions à des fins sous-marines variées qui peuvent être dangereuses, voire impossibles pour les plongeurs, en fournissant un flux de données et d'énergie grâce à une série de connexions par câble, et en étant ainsi contrôlé par un opérateur.
